# FASCICULE DE BREVET EUROPEEN

(11) **EP 1 302 390 B1**
(45) Date de publication et mention de la délivrance du brevet: **22.12.2004**
(21) Numéro de dépôt: 02292497.1
(22) Date de dépôt: 10.10.2002
(51) Int. Cl.: B62D 33/04, B60P 3/20

(54) **Cellule isotherme pour fourgonnette**
Isothermische Zelle für einen Lieferwagen
Isothermic cell for light delivery van

(30) Priorité: 16.10.2001 FR 0113316
(43) Date de publication de la demande: 16.04.2003
(73) Titulaire: E C P ETUDES REALISATIONS CONSTRUCTIONS AMENAGEMENTS POLYESTER, F-95480 Pierrelaye (Val d'Oise) (FR)
(72) Inventeur: Lebrequier, Marcel, 95150 Taverny (FR)
(74) Mandataire: Le Bras, Hervé

(56) Documents cités:
- EP-A- 0 884 215
- CH-A- 469 594
- DE-B- 1 117 611
- DE-U- 9 203 329
- FR-A- 2 664 546

## Description

L'invention concerne une cellule isotherme destinée à être montée à l"intérieur d'un véhicule de type fourgonnette, pour en constituer le volume utile de chargement accessible par au moins une porte arrière dudit véhicule, ladite cellule comportant notamment un panneau supérieur situé sous le pavillon dudit véhicule, un panneau inférieur recouvrant le plancher dudit véhicule, un panneau avant et deux panneaux latéraux qui s'étendent entre les bords en correspondance dudit panneau supérieur et dudit panneau inférieur, le panneau supérieur comportant sur chacun de ses bords latéraux une feuillure ouverte vers le bas et destinée à recevoir l'extrémité supérieure d'un panneau latéral.

Une telle cellule est décrite notamment dans le document FR-A-2 664 546. Ce document prévoit d'engager l'extrémité supérieure de chaque panneau latéral dans la feuillure correspondante, après installation du panneau inférieur, du panneau avant et du panneau supérieur temporairement fixé au pavillon, et de faire pivoter les panneaux latéraux autour de la feuillure vers l'extérieur pour réaliser le montage de la cellule à l'intérieur du véhicule. Cette disposition oblige à avoir une feuillure délimitée par des parois parallèles dont la largeur est légèrement supérieure à l'épaisseur des panneaux latéraux. Après montage, il y a des jeux entre les parois internes des panneaux latéraux et les bordures internes des feuillures, qu'il faut combler avec du mastic pour assurer l'étanchéité de la cellule, et surtout pour permettre un nettoyage facile des parois internes de la cellule pour des mesures d'hygiène, notamment lorsque le véhicule équipé de ladite cellule est destiné au transport de denrées alimentaires périssables.

En pratique, la feuillure est délimitée par deux parois minces rigides qui s'étendent vers le bas à partir de la face interne du panneau supérieure. Le positionnement précis de l'extrémité supérieure d'un panneau latéral est difficile à réaliser et demande un temps de montage appréciable. En outre, la paroi interne de la feuillure forme un angle vif avec la face interne du panneau supérieur, ce qui n'est pas souhaitable dans le transport de denrées alimentaires périssables. Enfin, dans le cas où on accroche des objets lourds sur des inserts métalliques incorporés lors du moulage des panneaux latéraux, les couples de basculement sont repris par la paroi mince interne de la feuillure qui, par construction, a une résistance limitée.

Le document DE 9 203 329 U montre un autre type d'isolation pour véhicule dans lequel un panneau supérieur présente latéralement des retours de panneau qui s'étendent vers le bas et dont les faces inférieures reçoivent chacune l'extrémité supérieure d'un panneau latéral.

Le premier but de l'invention est de proposer une modification de la cellule décrite en premier qui permette de simplifier le montage des panneaux latéraux.

Un deuxième but de l'invention est de proposer une cellule dont les parois latérales peuvent supporter des charges plus élevées.

Un troisième but de l'invention est de proposer une cellule qui ne comporte pas d'angles vifs dans les parties latérales supérieures afin d'améliorer les conditions d'hygiène et de simplifier le nettoyage.

Ces buts sont atteints par l'invention par le fait que :
a) le panneau supérieur présente latéralement des retours de panneau qui s'étendent vers le bas,
b) les feuillures sont ménagées dans les faces inférieures desdits retours et sont délimitées chacune du côté intérieur de ladite cellule par une surface oblique qui se raccorde à la face interne du retour correspondant par une surface d'appui sensiblement horizontale,
c) l'extrémité supérieure de chaque panneau latéral est conformée pour présenter une section, selon un plan vertical transversal, complémentaire de la section du retour correspondant selon le même plan vertical transversal, afin que la face interne dudit panneau latéral après montage soit dans le prolongement de la face interne dudit retour.

La feuillure présente ainsi une forme qui s'évase vers le bas, ce qui facilite l'introduction de la partie complémentaire de l'extrémité du panneau latéral lors du pivotement de ce dernier. L'extrémité du panneau latéral comporte également du côté interne une surface de butée qui coopère avec la surface d'appui du retour lors du pivotement et après pivotement. Les surfaces coopérantes obliques assurent un positionnement précis après montage. La feuillure est séparée de la paroi interne du retour correspondant par un talon qui s'évase à partir de la surface d'appui, ce qui permet de reprendre des couples de basculement importants. Enfin, la face interne du panneau latéral après montage est dans le prolongement de la face interne du retour correspondant du panneau supérieur, ce qui facilite le nettoyage de la cellule.

Avantageusement, chaque feuillure est délimitée latéralement par deux surfaces obliques disposées de part et d'autre d'un plan vertical et divergeant vers le bas.

Cette disposition permet un positionnement précis du panneau latéral par effet de coin.

Afin d'améliorer encore les conditions d'hygiène, et selon une autre caractéristique avantageuse de l'invention, la face interne de chaque retour se raccorde à la face inférieure du panneau supérieur par une surface sensiblement cylindrique.

D'autres avantages et caractéristiques de l'invention ressortiront à la lecture de la description suivante faite à titre d'exemple et en référence aux dessins annexés, dans lesquels :
la figure 1 est une coupe transversale d'une caisse d'un véhicule de type fourgonnette équipée d'une cellule conforme à l'invention.
La figure 2 montre à plus grande échelle la zone de jonction entre le panneau supérieur et un panneau latéral de la cellule de la figure 1.
La figure 3 montre le positionnement d'un panneau latéral de la figure 1 avant son basculement, et
les figures 4 à 6, semblables aux figures 1 à 3, montrent une variante préférée de réalisation de l'invention.

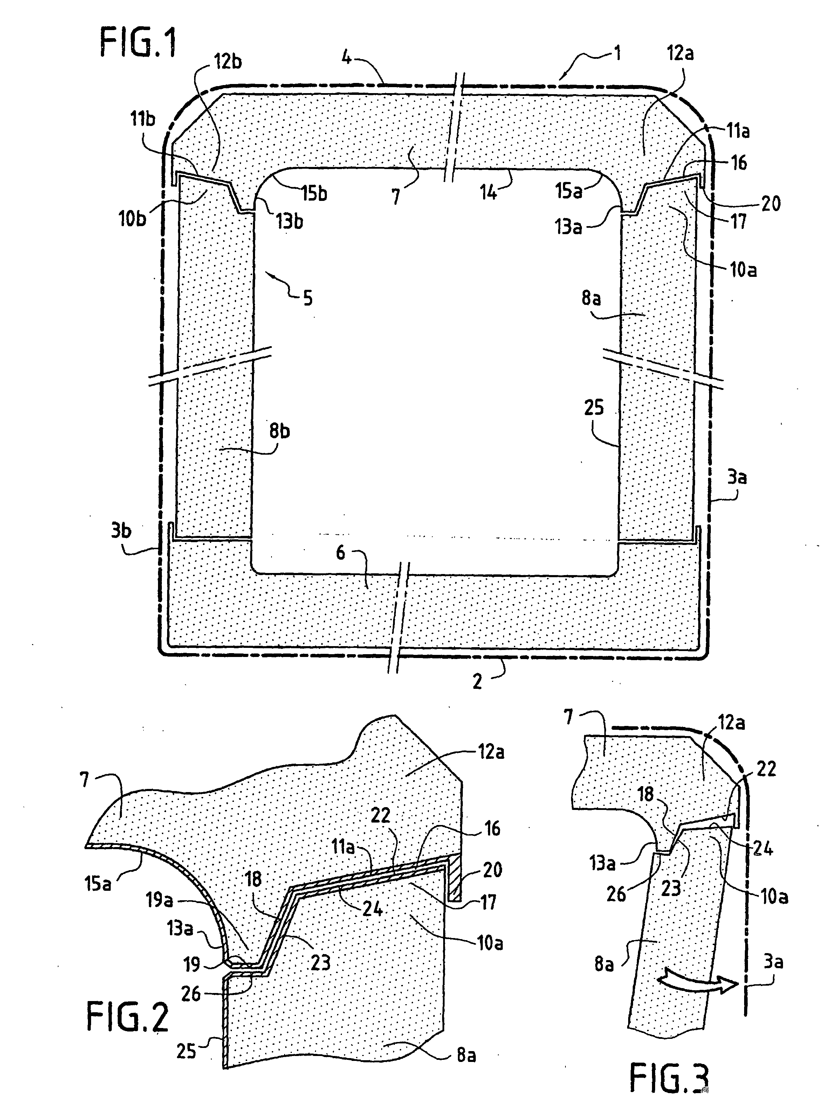

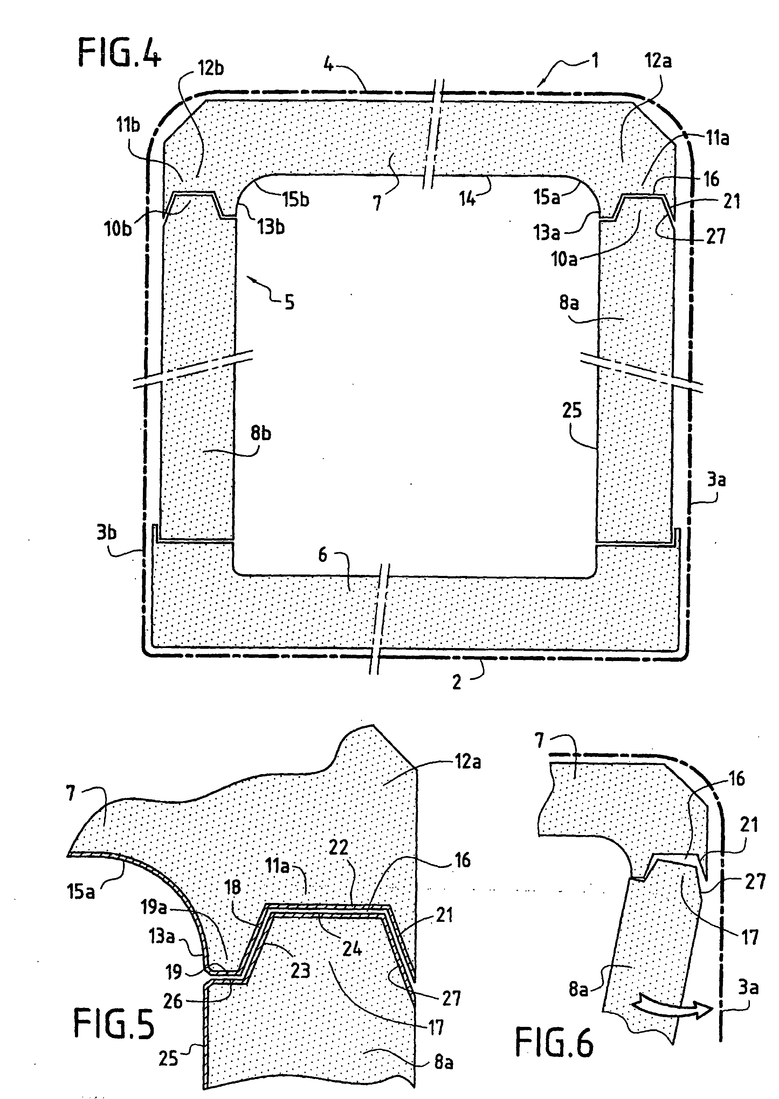

Les figures 1 et 4 montrent en coupe la caisse 1 d'un véhicule de type fourgonnette, qui comporte un plancher 2 plat, deux parois latérales 3a et 3b et un pavillon 4. Cette caisse 1 comporte en outre une porte à l'arrière du véhicule et éventuellement une cloison avant.

Cette caisse 1 contient une cellule isotherme 5, qui comporte, de manière connue, un panneau inférieur 6 recouvrant le plancher 2, un panneau supérieur 7 situé sous le pavillon 4, un panneau avant séparant l'intérieur de la cellule 5 de la cabine de pilotage du véhicule, et deux panneaux latéraux 8a et 8b disposés à la verticale entre les bords latéraux des panneaux inférieur 6 et supérieur 7. La cellule 5 comporte en outre des panneaux complémentaires, non montrés sur les dessins, qui viennent recouvrir les faces internes de la porte arrière du véhicule et les éléments de caisse qui délimitent l'ouverture de la porte.

Les divers panneaux de la cellule 5 sont réalisés par moulage et présentent une peau interne en polyester rigidifiée par des fibres et un corps en mousse de polyuréthane par exemple.

Sur les figures 1 et 4, on a montré une caisse de véhicule à plancher plat. L'invention s'applique également à un véhicule dont la caisse comporte des passages de roue. Dans ce cas, le panneau inférieur 6 se présente sous la forme d'un bac qui recouvre le plancher 2 et les passages de roue.

Le montage de la cellule 5 dans la caisse 2 est réalisé de la manière décrite ci-après. On introduit d'abord le panneau inférieur 6 dans la caisse 2 et on le positionne correctement sur le plancher 2. On place ensuite le panneau supérieur 7 et le panneau avant. On fixe temporairement le panneau supérieur 7 contre le pavillon 4. On entre enfin les panneaux latéraux 3a et 3b par l'ouverture arrière du véhicule. On positionne l'extrémité supérieure 10a, 10b des panneaux latéraux 8a, 8b au voisinage des bords latéraux 11a, 11b du panneau supérieur 7, les panneaux latéraux 8a et 8b étant présentés obliquement et on fait pivoter ces panneaux latéraux 8a et 8b vers l'extérieur autour de leurs extrémités supérieures respectives 10a et 10b pour les plaquer contre les parois latérales 3a et 3b du véhicule. On recouvre ensuite les faces internes de l'arrière de la caisse et de la porte par les panneaux complémentaires, et on termine le montage en appliquant des joints d'étanchéité à la jonction des différents panneaux et contre les battées de la porte.

L'invention concerne la jonction entre les bords latéraux 11a et 11b du panneau supérieur 7 et les extrémités 10a et 10b des panneaux latéraux 8a et 8b.

Ainsi que cela se voit clairement sur les dessins et en particulier sur les figures 2 et 5, la paroi supérieure 7 présente latéralement des retours de panneau 12a, 12b qui s'étendent vers le bas, et dont les faces internes inférieures 13a, 13b sensiblement verticales se raccordent avec la face inférieure 14 du panneau supérieur 7 par des surfaces 15a, 15b sensiblement cylindriques, afin de supprimer les angles vifs dans les régions latérales supérieures du volume utile de chargement du véhicule.

Les bords latéraux 11a et 11b du panneau supérieur 7 sont ainsi réalisés par les faces inférieures des retours de panneau 12a et 12b.

Ces faces inférieures 11a, 11b présentent chacune une feuillure 16, montrée à plus grande échelle sur les figures 2 et 5, dans laquelle loge, après montage de la cellule 5, une nervure 17 formée dans la face supérieure des extrémités 10a, 10b des panneaux latéraux.

La feuillure 16 est délimitée latéralement du côté de l'intérieur de la cellule 5, par une surface oblique 18 raccordée à la paroi interne 13a, 13b du retour correspondant 12a, 12b, par une surface 19 sensiblement horizontale. La surface oblique 18 est disposée de telle manière que le prolongement inférieur de cette surface se rapproche du panneau latéral opposé.

L'extrémité inférieure des retours 12a et 12b du panneau supérieur 7 présente ainsi un talon 19a qui s'évase au-dessus de la surface 19.

La feuillure 16 est en outre délimitée latéralement du côté extérieur, dans le mode de réalisation montré sur les figures 1 à 3, par une languette verticale 20.

Selon un mode de réalisation préféré de l'invention, la feuillure 16 est délimitée latéralement du côté extérieur, par une deuxième surface oblique 21 disposée sensiblement symétriquement à la surface oblique 18 par rapport à un plan médian vertical de la feuillure 16, ainsi que cela est visible sur les figures 4 à 6.

Les fonds des feuillures 16 présentent une surface plane 22 sensiblement horizontale ou légèrement oblique.

Les faces supérieures des extrémités 10a et 10b des panneaux latéraux 8a et 8b, présentent une section, selon un plan transversal vertical complémentaire de la section des faces inférieures 11a et 11b des retours de panneaux correspondants 12a et 12b. Ainsi, la nervure 17 est délimitée par une surface oblique 23 qui vient s'accoler contre la surface oblique 18, et une surface d'extrémité 24 qui vient en butée contre le fond 22 de la feuillure 16. La surface oblique 23 est raccordée à la face interne 25 du panneau vertical correspondant 8a, 8b par une surface sensiblement plane 26 qui vient en appui contre la surface 19 de la face inférieure du retour correspondant 12a, 12b.

Dans le mode de réalisation préféré montré sur les figures 4 à 6, la nervure 17 comporte en outre une deuxième surface oblique 27 qui vient en appui contre la surface oblique externe 21 de la feuillure 16. Dans ce mode de réalisation préféré, la hauteur de la nervure 17 peut être légèrement inférieure à la profondeur de la feuillure 16, les surfaces obliques formant alors un effet de coin qui positionne parfaitement les panneaux latéraux par rapport au panneau supérieur 7.

Par construction, et après montage de la cellule 5, la face interne 25 de chaque panneau latéral 8a, 8b se trouve dans le prolongement des faces internes 13a et 13b des retours 12a et 12b du panneau supérieur 7.

Cette disposition permet de supprimer une grande partie des angles vifs des cellules antérieures et de faciliter le nettoyage de la cellule 5.

Les figures 3 et 6 montrent le positionnement des panneaux latéraux avant leur basculement au cours du montage de la cellule 1. Le monteur met la surface plane 26 de l'extrémité supérieure d'un panneau latéral 8a, 8b en butée contre la surface plane 19 de l'extrémité inférieure du retour 12a, 12b correspondant, puis fait pivoter le panneau latéral vers l'extérieur. La coopération des surfaces obliques 23 et 18 permet un positionnement précis, par effet du coin, des divers éléments après montage.

Les peaux en polyester recouvrent les faces inférieures des retours de panneau 12a, 12b et les faces supérieures des panneaux latéraux 8a et 8b. La languette 20 du mode de réalisation montré sur les figures 1 à 3 est également en polyester.

Sur les figures 1 2, 4 et 5, un jeu est montré à la jonction des retours de panneau 12a et 12b et des extrémités des panneaux latéraux 8a et 8b, par souci de clarté. En fait, les surfaces horizontales 19 et 26 sont jointives. Il en est de même des surfaces obliques 18 et 23 et des surfaces obliques 21 et 27.

## Revendications

1. Cellule isotherme destinée à être montée à l'intérieur d'un véhicule de type fourgonnette, pour en constituer le volume utile de chargement accessible par au moins une porte arrière dudit véhicule, ladite cellule comportant notamment un panneau supérieur (7) situé sous le pavillon (4) dudit véhicule, un panneau inférieur (6) recouvrant le plancher (2) dudit véhicule, un panneau avant et deux panneaux latéraux (8a, 8b) qui s'étendent entre les bords en correspondance dudit panneau supérieur (7) et dudit panneau inférieur (6), le panneau supérieur (7) comportant sur chacun de ses bords latéraux une feuillure (16) ouverte vers le bas et destinée à recevoir l'extrémité supérieure d'un panneau latéral,
**caractérisée par le fait que** :
a) le panneau supérieur (7) présente latéralement des retours de panneau (12a, 12b) qui s'étendent vers le bas,
b) les feuillures (16) sont ménagées dans les faces inférieures (11a, 11b) desdits retours (12a, 12b) et sont délimitées chacune du côté intérieur de ladite cellule (5) par une surface oblique (18) qui se raccorde à la face interne (13a) du retour correspondant (12a) par une surface d'appui (19) sensiblement horizontale ;
c) l'extrémité supérieure (10a) de chaque panneau latéral (8a, 8b) est conformée pour présenter une section, selon un plan vertical transversal, complémentaire de la section du retour (12a, 12b) correspondant, selon le même plan vertical transversal, afin que la face interne (25) dudit panneau (8a, 8b) latéral après montage soit dans le prolongement de la face interne (13a) dudit retour (12a).

2. Cellule selon la revendication 1, **caractérisée par le fait que** chaque feuillure (16) est délimitée latéralement par deux surfaces obliques (18, 21) disposées de part et d'autre d'un plan vertical et divergeant vers le bas.

3. Cellule selon l'une quelconque des revendications 1 ou 2, **caractérisée par le fait que** la face interne (13a) de chaque retour (12a, 12b) se raccorde à la face inférieure (14) du panneau supérieur (7) par une surface (15a, 15b) sensiblement cylindrique.

## Patentansprüche

1. Isothermische Zelle, die dafür bestimmt ist, in das Innere eines Lieferwagens eingebaut zu werden, um den Nutzlastraum zu bilden, der durch mindestens eine Hintertür des Wagens zugänglich ist, wobei die Zelle insbesondere eine obere Platte (7) aufweist, die unter dem Dachhimmel (4) des Wagens angeordnet ist, eine untere Platte (6), die den Fußboden (2) des Wagens bedeckt, eine Vorderplatte und zwei Seitenplatten (8a, 8b), die sich entlang den Rändern in Übereinstimmung mit der oberen Platte (7) und der unteren Platte (6) erstrecken, wobei die obere Platte (7) an jedem ihrer Seitenränder einen Falz (16) aufweist, der nach unten hin geöffnet ist, und dazu bestimmt ist, das obere Endstück einer Seitenplatte aufzunehmen,
**dadurch gekennzeichnet, dass**:
a) die obere Platte (7) seitlich Vorsprünge der Platte (12a, 12b) aufweist, die sich nach unten hin erstrecken,
b) die Falze (16) an den unteren Seiten (11a, 11b) dieser Vorsprünge (12a, 12b) angeordnet und jeder an der Innenseite der Zelle (5) von einer schrägen Fläche (18) begrenzt werden, die sich an der Innenseite (13a) des entsprechenden Vorsprungs (12a) durch eine Stützfläche (19), die merklich horizontal verläuft, anschließt;
c) das obere Ende (10a) jeder Seitenplatte (8a, 8b) so gebildet ist, dass es einen Schnitt gemäß einer vertikalen Transversalebene hat, der zu dem entsprechenden Schnitt des Vorsprungs (12a, 12b) gemäß der selben vertikalen Transversalebene komplementär ist, damit die Innenseite (25) der Seitenplatte (8a, 8b) nach dem Montieren in der Verlängerung der Innenseite (13a) des Vorsprungs (12a) ist.

2. Zelle nach Anspruch 1, **dadurch gekennzeichnet, dass** jeder Falz (16) seitlich von zwei schrägen Flächen (18, 21) begrenzt wird, die auf beiden Seiten einer vertikalen Ebene angeordnet sind und nach unten hin divergieren.

3. Zelle nach einem der Ansprüche 1 oder 2, **dadurch gekennzeichnet, dass** die Innenseite (13a) jedes Vorsprungs (12a, 12b) sich an die Unterseite (14) der oberen Platte (7) durch eine merklich zylindrische Fläche (15a, 15b) anschließt.

## Claims

1. Isothermal unit intended to be installed inside a delivery van-type vehicle in order to form the useful loading volume accessible via at least one rear door of the said vehicle, said unit comprising in particular an upper panel (7) situated underneath the roof (4) of said vehicle, a lower panel (6) covering the floor (2) of said vehicle, a front panel and two side panels (8a, 8b) extending between the corresponding edges of said upper panel (7) and of said lower panel (6), the upper panel (7) comprising on each of its lateral sides a groove (16) that is downwardly open and designed to receive the 15 upper end of a side panel, **characterised in that**:
a) the upper panel (7) has laterally panel angle sections (12a, 12b) that extend downwardly,
b) the grooves (16) are provided in the lower faces (11a, 11b) of said angle sections (12a, 12b) and are each bordered on the lower side of said unit (5) by an inclined surface (18) that is joined to the internal face (13a) of the corresponding angle section (12a) by a substantially horizontal support surface (19),
c) the upper end (10a) of each side panel (8a, 8b) is designed to have a section, along a transverse vertical plane, that is complementary to the corresponding angle section (12a, 12b), along the same transverse vertical plane, so that the internal face (25) of said side panel (8a, 8b) after installation is in the extension of the internal face (13a) of said angle section (12a).

2. Unit according to claim 1, **characterised in that** each groove (16) is laterally bordered by two inclined surfaces (18, 21) arranged on both sides of a vertical plane and diverging downwardly.

3. Unit according to either of claims 1 and 2, **characterised in that** the internal face (13a) of each angle section (12a, 12b) is joined to the lower face (14) of the upper panel (7) by a substantially cylindrical surface (15a, 15b).
